# EUROPEAN PATENT APPLICATION

(11) **EP 4 782 676 A2**
(43) Date of publication of application: **29.07.2026**
(21) Application number: 26154213.8
(22) Date of filing: 26.01.2026
(51) Int. Cl.: F02K 1/66, F02K 3/02, F02K 3/075

(54) **AIRCRAFT PROPULSION SYSTEM WITH AUXILIARY FLOWPATH SYSTEM**

(30) Priority: 26.01.2025 US 202519037272
(71) Applicant: RTX Corporation, Farmington, CT 06032 (US)
(72) Inventor: MORTON, Jeffrey T., Manchester (US); SAWYERS-ABBOTT, Nigel D., South Glastonbury (US)
(74) Representative: Dehns

(57) **Abstract**

An aircraft propulsion system (20) includes an open propulsor rotor (34), a turbine engine (32) and an auxiliary flowpath (114). The turbine engine includes an engine flowpath (72), a compressor section (67), a combustor section (68) and a turbine section (69). The engine flowpath extends through the compressor section, the combustor section and the turbine section from an engine flowpath inlet (74) to an engine flowpath exhaust. The auxiliary flowpath extends longitudinally along a trajectory from an auxiliary flowpath inlet (122) to an auxiliary flowpath outlet (124). The auxiliary flowpath inlet is disposed along an exterior of the propulsion system that borders an environment external to the propulsion system. The auxiliary flowpath outlet is disposed along the engine flowpath. The turbine engine is axially aft of the open propulsor rotor along an axis. The trajectory extends axially forward along the axis as the auxiliary flowpath extends longitudinally from the auxiliary flowpath inlet.

## Description

### BACKGROUND OF THE DISCLOSURE

### 1. Technical Field

This disclosure relates generally to an aircraft propulsion system and, more particularly, to directing air into the aircraft propulsion system.

### 2. Background Information

Various types and configurations of propulsion systems for an aircraft are known in the art. While these known aircraft propulsion systems have various benefits, there is still room in the art for improvement.

### SUMMARY OF THE DISCLOSURE

According to an aspect of the present disclosure, a propulsion system is provided for an aircraft. This propulsion system includes an open propulsor rotor, a turbine engine and an auxiliary flowpath. The turbine engine is configured to drive rotation of the open propulsor rotor about an axis. The turbine engine includes an engine flowpath, a compressor section, a combustor section and a turbine section. The engine flowpath extends through the compressor section, the combustor section and the turbine section from an engine flowpath inlet to an engine flowpath exhaust. The auxiliary flowpath extends longitudinally along a trajectory from an auxiliary flowpath inlet to an auxiliary flowpath outlet. The auxiliary flowpath inlet is disposed along an exterior of the propulsion system that borders an environment external to the propulsion system. The auxiliary flowpath outlet is disposed along the engine flowpath. The turbine engine is axially aft of the open propulsor rotor along the axis. The trajectory extends axially forward along the axis as the auxiliary flowpath extends longitudinally from the auxiliary flowpath inlet.

According to another aspect of the present disclosure, another propulsion system is provided for an aircraft. This propulsion system includes an open propulsor rotor, a turbine engine and an auxiliary flowpath. The turbine engine is configured to drive rotation of the open propulsor rotor about an axis. The turbine engine includes an engine flowpath, a compressor section, a combustor section and a turbine section. The engine flowpath extends through the compressor section, the combustor section and the turbine section from an engine flowpath inlet to an engine flowpath exhaust. The auxiliary flowpath extends longitudinally along a trajectory from an auxiliary flowpath first orifice to an auxiliary flowpath second orifice. The auxiliary flowpath first orifice is disposed along an exterior of the propulsion system that borders an environment external to the propulsion system. The auxiliary flowpath second orifice is disposed along the engine flowpath. The trajectory extends circumferentially about the axis as the auxiliary flowpath extends longitudinally between the auxiliary flowpath first orifice and the auxiliary flowpath second orifice.

According to still another aspect of the present disclosure, another propulsion system is provided for an aircraft. This propulsion system includes an open propulsor rotor, a turbine engine, an auxiliary flowpath and a flow regulator. The turbine engine is configured to drive rotation of the open propulsor rotor about an axis. The turbine engine includes an engine flowpath, a compressor section, a combustor section and a turbine section. The engine flowpath extends through the compressor section, the combustor section and the turbine section from an engine flowpath inlet to an engine flowpath exhaust. The auxiliary flowpath extends from an auxiliary flowpath inlet to an auxiliary flowpath outlet. The auxiliary flowpath inlet is disposed along an exterior of the propulsion system that borders an environment external to the propulsion system. The auxiliary flowpath outlet is disposed along the engine flowpath. The flow regulator is configured to open during a reverse thrust operating mode such that the auxiliary flowpath directs air from the environment into the engine flowpath.

The flow regulator may also be configured to at least partially close off a section of the engine flowpath between the auxiliary flowpath outlet and the engine flowpath inlet during the reverse thrust operating mode.

The flow regulator may be arranged at the auxiliary flowpath inlet.

The flow regulator may be arranged at the auxiliary flowpath outlet.

The propulsion system may also include a second flow regulator configured to open during the reverse thrust operating mode such that the auxiliary flowpath directs air from the environment into the engine flowpath. The second flow regulator may be arranged at the auxiliary flowpath inlet.

The flow regulator may be configured to close during a forward thrust operating mode and block flow through the auxiliary flowpath.

The flow regulator may be configured to close during a forward thrust operating mode and block flow through the auxiliary flowpath.

The flow regulator may be configured to close during a forward thrust operating mode and block flow through the auxiliary flowpath.

The trajectory may change from a first direction along the axis to a second direction along the axis as the auxiliary flowpath extends longitudinally between the auxiliary flowpath first orifice and the auxiliary flowpath second orifice.

The trajectory may extend axially aft along the axis as the auxiliary flowpath extends longitudinally to the auxiliary flowpath outlet.

The trajectory may extend circumferentially about the axis as the auxiliary flowpath extends longitudinally between the auxiliary flowpath inlet and the auxiliary flowpath outlet.

The auxiliary flowpath outlet may be disposed between the engine flowpath inlet and the compressor section along the engine flowpath.

The turbine engine may also include an inlet vane structure. The inlet vane structure may include a plurality of inlet guide vanes arranged in an annular array. Each of the inlet guide vanes may extend across the engine flowpath. The auxiliary flowpath outlet may be disposed between the inlet vane structure and the compressor section along the engine flowpath.

The inlet vane structure may be a core inlet vane structure.

At least one of the inlet guide vanes may be a fixed guide vane.

The inlet vane structure may be disposed at the engine flowpath inlet.

The turbine engine may also include an inlet vane structure. The inlet vane structure may include a plurality of inlet guide vanes arranged in an annular array. Each of the inlet guide vanes may extend across the engine flowpath. The auxiliary flowpath outlet may be disposed between the engine flowpath inlet and the inlet vane structure along the engine flowpath.

The inlet vane structure may be a compressor inlet vane structure.

At least one of the inlet guide vanes may be a variable guide vane.

The inlet vane structure may be disposed upstream of and next to a compressor rotor in the compressor section.

The propulsion system may include an open guide vane structure next to the open propulsor rotor.

The auxiliary flowpath inlet may be disposed axially between the open propulsor rotor and the open guide vane structure along the axis.

The propulsion system may also include a splitter structure. A leading edge of the splitter structure may form an outer peripheral boundary of the engine flowpath inlet. The auxiliary flowpath inlet may be disposed axially between the leading edge of the splitter structure and the open guide vane structure.

The propulsion system may also include an inlet flow regulator disposed at the auxiliary flowpath inlet. The inlet flow regulator may be configured to regulate airflow from the environment into the auxiliary flowpath through the auxiliary flowpath inlet.

The propulsion system may include an outlet flow regulator disposed at the auxiliary flowpath outlet. The outlet flow regulator may be configured to regulate airflow from the auxiliary flowpath into the engine flowpath through the auxiliary flowpath outlet.

The propulsion system may include a flow regulator comprising a regulator body. The regulator body may be configured to translate between a first position and a second position to regulate airflow in the auxiliary flowpath.

The propulsion system may also include a flow regulator comprising a regulator body. The regulator body may be configured to pivot between a first position and a second position to regulate airflow in the auxiliary flowpath.

The auxiliary flowpath may be or otherwise include an annular passage that extends circumferentially around the axis.

The auxiliary flowpath may include a plurality of passages arranged circumferentially about the axis.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of a propulsion system for an aircraft.
FIG. 2 is a schematic illustration of a portion of the propulsion system at a propulsion section during forward thrust operation.
FIG. 3 is a schematic illustration of a portion of the propulsion system at an auxiliary flowpath system.
FIG. 4 is a sectional illustration through the propulsion section along line 4-4 of FIG. 2.
FIG. 5 is a sectional illustration through the propulsion section along line 5-5 of FIG. 6.
FIG. 6 is a schematic illustration of a portion of the propulsion system at the propulsion section during reverse thrust operation.
FIGS. 7A and 7B are schematic illustrations of a portion of a flow regulator in open and closed positions.
FIGS. 8A and 8B are schematic illustrations of a portion of another flow regulator in open and closed positions.
FIGS. 9 and 10 are schematic illustrations of a portion of the propulsion system at the auxiliary flowpath system with various flow regulator arrangements.
FIGS. 11 and 12 are schematic illustrations of a portion of the propulsion system with various auxiliary flowpath arrangements.

### DETAILED DESCRIPTION

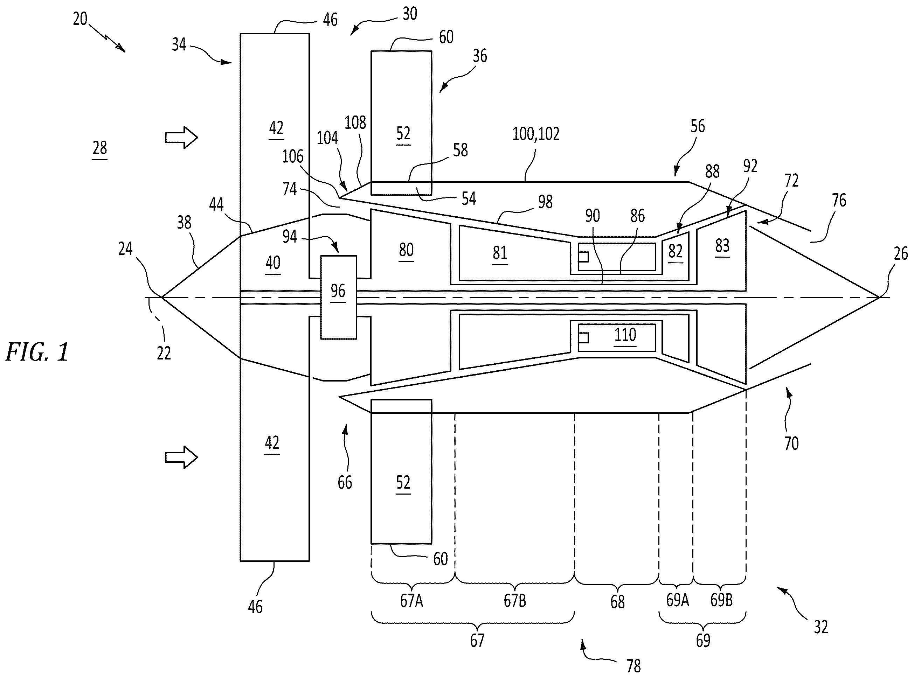

FIG. 1 is a schematic illustration of a propulsion system 20 for an aircraft. The aircraft may be an airplane, a drone (e.g., an unmanned aerial vehicle (UAV)), or any other manned or unmanned aerial vehicle or system. The aircraft propulsion system 20 extends axially along an axis 22 between an upstream, forward end 24 of the aircraft propulsion system 20 and a downstream, aft end 26 of the aircraft propulsion system 20. The propulsion system axis 22 may be a centerline axis of the aircraft propulsion system 20 and/or a centerline axis of one or more members of the aircraft propulsion system 20. The propulsion system axis 22 may also or alternatively be a rotational axis of one or more members of the aircraft propulsion system 20.

The aircraft propulsion system 20 may be configured as an open rotor propulsion system with a single open rotor and swirl recovery vane (SRV) architecture. Herein, the term "open" may describe a propulsion system section and/or a propulsion system component which is open to an environment 28 (e.g., an ambient environment) external to the aircraft propulsion system 20 and, more generally, the aircraft. The aircraft propulsion system 20 of FIG. 1, for example, includes an open rotor propulsion section 30 and a gas turbine engine 32.

The propulsion section 30 of FIG. 1 includes an open propulsor rotor 34 and an open guide vane structure 36. These propulsion section members 34 and 36 are un-ducted components of the aircraft propulsion system 20 and its propulsion section 30. The propulsion section 30 of FIG. 1 also includes a nose cone 38 disposed at (e.g., on, adjacent or proximate) the propulsion system forward end 24. Briefly, this nose cone 38 may be configured as a spinner which is rotatable with the propulsor rotor 34 about the propulsion system axis 22. Alternatively, the nose cone 38 may be configured as a stationary structure of the propulsion section 30.

The propulsor rotor 34 includes a rotor base 40 (e.g., a disk or a hub) and a plurality of open propulsor blades 42 (e.g., airfoils). The propulsor blades 42 are arranged and may be equispaced circumferentially about the rotor base 40 and the propulsion system axis 22 in an array (e.g., a circular array), which array of propulsor blades may be unshrouded or alternatively shrouded by a tubular propulsor rotor shroud dedicated to the propulsor rotor 34 for example. Each of the propulsor blades 42 is connected to (e.g., formed integral with or otherwise attached to) the rotor base 40. Each of the propulsor blades 42 projects spanwise along a span line of the respective propulsor blade 42 (e.g., radially relative to the propulsion system axis 22) out from an exterior surface 44 of the rotor base 40, into the external environment 28, to a distal tip 46 of the respective propulsor blade 42. Each propulsor blade 42 is thereby configured as an un-ducted propulsor blade which is exposed to (e.g., disposed in) the surrounding external environment 28.

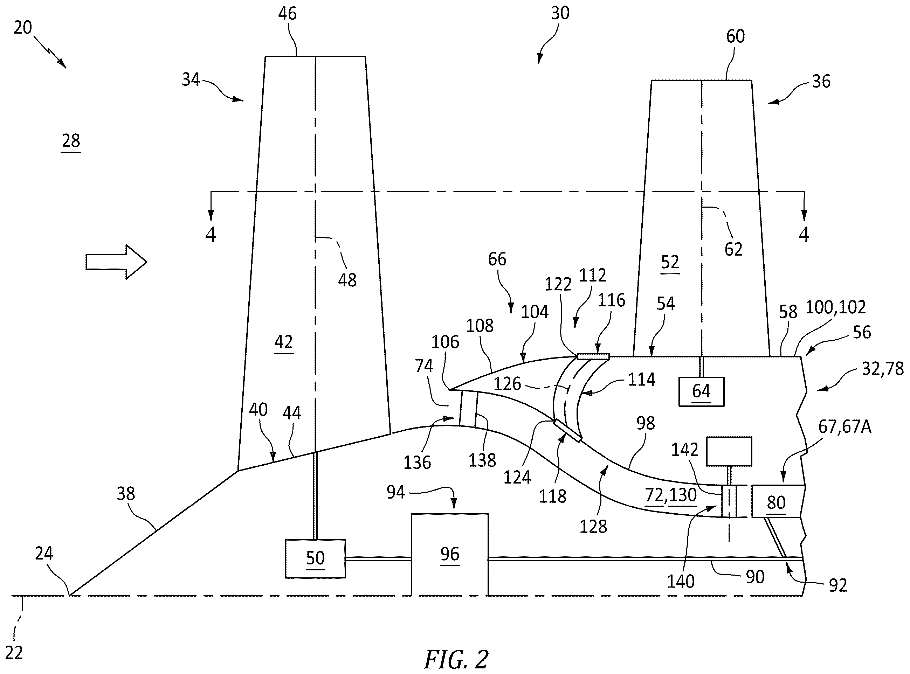

Referring to FIG. 2, each propulsor blade 42 may be configured to pivot about a respective blade pivot axis 48. This blade pivot axis 48 may generally extend radially relative to the propulsion system axis 22. Each propulsor blade 42 of FIG. 2 is operatively coupled with a blade actuation system 50. This blade actuation system 50 is configured to pivot each propulsor blade 42 about its respective blade pivot axis 48. By pivoting each propulsor blade 42 about its blade pivot axis 48, a pitch of the respective propulsor blade 42 may be changed. Of course, it is contemplated some or all of the propulsor blades 42 may be alternatively moved to change the propulsor blade pitch. Moreover, it is contemplated some or all of the propulsor blades 42 may alternatively be fixed pitch propulsor blades in other embodiments.

The guide vane structure 36 of FIG. 1 includes a plurality of open exit guide vanes 52 (e.g., airfoils). These guide vanes 52 are arranged and may be equispaced circumferentially about the propulsion system axis 22 in an array (e.g., a circular array), which array of guide vanes may be unshrouded or alternatively shrouded by a tubular guide vane shroud dedicated to the guide vane structure 36 for example. The guide vane structure 36 and its guide vanes 52 are arranged axially next to (e.g., adjacent) the propulsor rotor 34 and its propulsor blades 42. The guide vane structure 36 and its guide vanes 52 of FIG. 1, for example, are arranged downstream of the propulsor rotor 34 and its propulsor blades 42, without (e.g., any) other elements axially therebetween to obstruct, turn and/or otherwise influence the air propelled by the propulsor rotor 34 to the guide vane structure 36 for example. Each of the guide vanes 52 of FIG. 1 is coupled to a support structure 54 of a stationary housing structure 56 for the aircraft propulsion system 20. This support structure 54 may be configured as or otherwise include a support frame, a case and/or another fixed structure of the housing structure 56. Each of the guide vanes 52 projects spanwise along a span line of the respective guide vane 52 (e.g., radially relative to the propulsion system axis 22) out from an exterior surface 58 of the housing structure 56, into the external environment 28, to a distal tip 60 of the respective guide vane 52. Here, the exterior surface 58 radially borders the external environment 28 and forms an exterior aerodynamic flow surface. Each guide vane 52 is thereby configured as an un-ducted guide vane which is exposed to (e.g., disposed in) the surrounding external environment 28.

Referring to FIG. 2, each guide vane 52 may be configured to pivot about a respective vane pivot axis 62. This vane pivot axis 62 may generally extend radially relative to the propulsion system axis 22. Each guide vane 52 of FIG. 2 is operatively coupled with an open guide vane actuation system 64, which vane actuation system 64 may be discrete from or integrated as a functional part of the blade actuation system 50. The vane actuation system 64 is configured to pivot each guide vane 52 about its respective vane pivot axis 62. By pivoting each guide vane 52 about its vane pivot axis 62, a pitch of the respective guide vane 52 may be changed. Of course, it is contemplated some or all of the guide vanes 52 may be alternatively moved to change the guide vane pitch. Moreover, it is contemplated some or all of the guide vanes 52 may alternatively be fixed pitch guide vanes in other embodiments.

Referring to FIG. 1, the turbine engine 32 includes an inlet section 66, a compressor section 67, a combustor section 68, a turbine section 69 and an exhaust section 70. The compressor section 67 of FIG. 1 includes a low pressure compressor (LPC) section 67A and a high pressure compressor (HPC) section 67B. The turbine section 69 of FIG. 1 includes a high pressure turbine (HPT) section 69A and a low pressure turbine (LPT) section 69B. The turbine engine 32 also includes an engine flowpath 72 (e.g., annular core flowpath) which extends longitudinally through the aircraft propulsion system 20 of FIG. 1 and its turbine engine 32 from an airflow inlet 74 (e.g., an inlet orifice) into the engine flowpath 72 to a combustion products exhaust 76 (e.g., an exhaust orifice) from the engine flowpath 72. The engine flowpath inlet 74 is also an airflow inlet into the aircraft propulsion system 20 of FIG. 1 and its turbine engine 32. The engine flowpath exhaust 76 is also a combustion products exhaust from the aircraft propulsion system 20 of FIG. 1 and its turbine engine 32. At least (or only) the LPC section 67A, the HPC section 67B, the combustor section 68, the HPT section 69A and the LPT section 69B collectively form a core 78 (e.g., a gas generator) of the turbine engine 32.

Each of the engine sections 67A, 67B, 69A and 69B includes a respective bladed rotor 80-83; e.g., a ducted and/or shrouded engine rotor. Each of these engine rotors 80-83 includes a rotor base (e.g., a disk or a hub) and a plurality of rotor blades (e.g., airfoils, vanes, etc.). The rotor blades are arranged and may be equispaced circumferentially around the respective rotor base in an array. The rotor blades may also be arranged into one or more stages longitudinally along the engine flowpath 72. Each of the rotor blades is connected to the respective rotor base. Each of the rotor blades projects radially (e.g., spanwise) out from the respective rotor base into the engine flowpath 72 and to a distal tip of the respective rotor blade.

The HPC rotor 81 is coupled to and rotatable with the HPT rotor 82. The HPC rotor 81 of FIG. 1, for example, is connected to the HPT rotor 82 by a high speed shaft 86. At least (or only) the HPC rotor 81, the HPT rotor 82 and the high speed shaft 86 collectively form a high speed rotating structure 88; e.g., a high speed spool of the turbine engine 32 and its engine core 78. This high speed rotating structure 88 of FIG. 1 and its members 81, 82 and 86 are rotatable about the propulsion system axis 22. However, in other embodiments, the high speed rotating structure 88 and its members 81, 82 and 86 may alternatively be rotatable about another rotational axis which is (e.g., radially and/or angularly) offset from the rotational axis of the propulsor rotor 34.

The LPC rotor 80 is coupled to and rotatable with the LPT rotor 83. The LPC rotor 80 of FIG. 1, for example, is connected to the LPT rotor 83 by a low speed shaft 90. At least (or only) the LPC rotor 80, the LPT rotor 83 and the low speed shaft 90 collectively form a low speed rotating structure 92; e.g., a low speed spool of the turbine engine 32 and its engine core 78. This low speed rotating structure 92 of FIG. 1 and its members 80, 83 and 90 are rotatable about the propulsion system axis 22. However, in other embodiments, the low speed rotating structure 92 and its members 80, 83 and 90 may alternatively be rotatable about another rotational axis which is (e.g., radially and/or angularly) offset from the rotational axis of the propulsor rotor 34.

The low speed rotating structure 92 is coupled to the propulsor rotor 34 through a drivetrain 94. This drivetrain 94 may be configured as a geared drivetrain, where a geartrain 96 (e.g., a transmission, a speed change device, an epicyclic geartrain, etc.) is disposed between and operatively couples the propulsor rotor 34 to the low speed rotating structure 92 and its LPT rotor 83. With this arrangement, the propulsor rotor 34 may rotate at a different (e.g., slower) rotational speed than the low speed rotating structure 92 and its LPT rotor 83. Here, the propulsor rotor 34 and the low speed rotating structure 92 may rotate in a common (the same) direction about the propulsion system axis 22 or in opposite directions about the propulsion system axis 22 depending, for example, upon the specific configuration of the geartrain 96. Alternatively, the drivetrain 94 may be configured as a direct-drive drivetrain, where the geartrain 96 is omitted. With such an arrangement, the propulsor rotor 34 rotates at a common (the same) rotational speed as the low speed rotating structure 92 and its LPT rotor 83.

The engine sections 66-70 of FIG. 1 are arranged sequentially along the propulsion system axis 22 and are housed within and/or formed by the housing structure 56. This housing structure 56 includes an engine case 98 (e.g., a gas generator case) and a nacelle 100. The engine case 98 houses one or more of the engine sections 67A-69B; e.g., the engine core 78. The engine case 98 of FIG. 1, for example, extends axially along (e.g., axially overlaps) and extends circumferentially about (e.g., circumscribes) the engine sections 67A-69B and the bladed rotors 80-83. The engine case 98 may also house the geartrain 96. The nacelle 100 houses and provides an aerodynamic cover over the engine case 98. An exterior wall 102 of the nacelle 100 of FIG. 1, for example, is disposed radially outboard of, extends axially along (e.g., axially overlaps) and extends circumferentially about (e.g., circumscribes) the engine core 78 and its engine case 98. This nacelle wall 102 may at least partially or completely form the exterior surface 58. With the foregoing arrangement, the bladed rotors 80-83 are disposed within the housing structure 56. By contrast, the propulsor rotor 34 and the guide vane structure 36 are disposed at least partially (or completely) outside of the housing structure 56.

During forward thrust operation of the aircraft propulsion system 20 of FIG. 1, ambient air within the external environment 28 is propelled by the rotating propulsor rotor 34 in the downstream, aft direction towards the propulsion system aft end 26. A major portion (e.g., more than 50%) of this air bypasses the turbine engine 32 to provide forward thrust while a minor portion (e.g., less than 50%) of the air flows into the turbine engine 32. For example, an outer stream of the air propelled by the rotating propulsor rotor 34 flows axially across the guide vane structure 36 and outside of the housing structure 56 and its exterior surface 58; e.g., along an exterior of the nacelle 100. The guide vane structure 36 conditions (e.g., straightens out, de-swirls, etc.) the outer stream of air within the external environment 28 to enhance the forward thrust. By contrast, an inner stream of the air propelled by the rotating propulsor rotor 34 may bypass the guide vane structure 36 and enter the turbine engine 32 and its engine flowpath 72 through the engine flowpath inlet 74.

Briefly, the air propelled by the propulsor rotor 34 may be split into the outer air stream and the inner air stream by a splitter structure 104; e.g., an annular eagle beak structure. A leading edge 106 of the splitter structure 104 of FIG. 1 forms a radial outer peripheral boundary of the engine flowpath inlet 74. An outer exterior wall 108 of this splitter structure 104 may extend axially along the propulsion system axis 22 from the splitter structure leading edge 106 to (or about) the guide vane structure 36. The splitter structure 104 of FIG. 1 and its splitter structure exterior wall 108 may thereby form a portion of the exterior surface 58 between the splitter structure leading edge 106 and the guide vane structure 36.

The air entering the engine flowpath 72 through the engine flowpath inlet 74 may be referred to as "core air". This core air is compressed by the LPC rotor 80 and the HPC rotor 81 and directed into a combustion chamber 110 (e.g., an annular combustion chamber) of a combustor (e.g., an annular combustor) in the combustor section 68. Fuel is injected into the combustion chamber 110 by one or more fuel injectors and mixed with the compressed core air to provide a fuel-air mixture. This fuel-air mixture is ignited and combustion products thereof flow through and sequentially drive rotation of the HPT rotor 82 and the LPT rotor 83. The rotation of the HPT rotor 82 and the LPT rotor 83 respectively drive rotation of the HPC rotor 81 and the LPC rotor 80 and, thus, compression of the core air. The rotation of the LPT rotor 83 also drives the rotation of the propulsor rotor 34 through the geartrain 96. The turbine engine 32 and its low speed rotating structure 92 thereby power operation of (e.g., drive rotation of) the propulsor rotor 34, for example through the geartrain 96 of FIG. 1, during aircraft propulsion system operation.

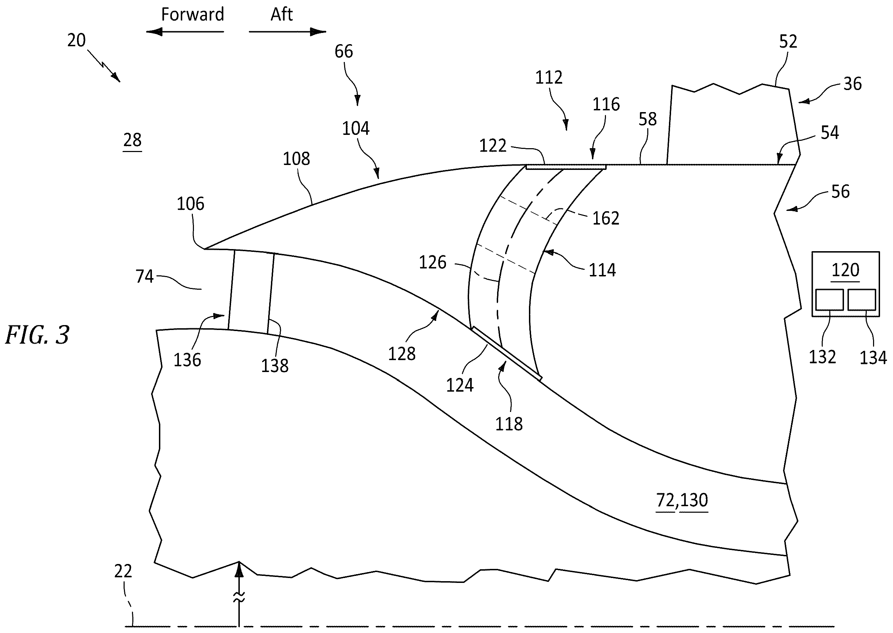

Referring to FIG. 3, the aircraft propulsion system 20 includes an auxiliary flowpath system 112 for the turbine engine 32 (see FIG. 2) and its engine flowpath 72. This auxiliary flowpath system 112 includes an auxiliary flowpath 114, an inlet flow regulator 116 and an outlet flow regulator 118. However, in other embodiments, it is contemplated the auxiliary flowpath system 112 may be configured without either one or both of the flow regulators 116 and/or 118. Where the auxiliary flowpath system 112 includes the flow regulator(s) 116 and/or 118, the auxiliary flowpath system 112 may also include an onboard electronic controller 120.

The auxiliary flowpath 114 extends longitudinally through the housing structure 56 from an airflow inlet 122 (e.g., an inlet orifice, inlet orifices) into the auxiliary flowpath 114 to an airflow outlet 124 (e.g., an outlet orifice, outlet orifices) from the auxiliary flowpath 114. More particularly, the auxiliary flowpath 114 extends longitudinally along a trajectory 126 of the auxiliary flowpath 114 from the auxiliary flowpath inlet 122 to the auxiliary flowpath outlet 124. This auxiliary flowpath trajectory 126 may follow a longitudinal centerline of at least a section (e.g., a half) of the auxiliary flowpath 114 when viewed, for example, in a longitudinal reference plane parallel with (e.g., including) the propulsion system axis 22; e.g., the plane of FIG. 3. The auxiliary flowpath trajectory 126 may extend axially in an axial forward direction (e.g., axially towards propulsor rotor 34 of FIG. 2, axially away from the guide vane structure 36 of FIG. 2) along the propulsion system axis 22 as at least an inlet section of the auxiliary flowpath 114 extends longitudinally from the auxiliary flowpath inlet 122. The auxiliary flowpath trajectory 126 may extend axially in an axial aft direction (e.g., axially away from the propulsor rotor 34 of FIG. 2, axially towards the guide vane structure 36 of FIG. 2) along the propulsion system axis 22 as at least an outlet section of the auxiliary flowpath 114 extends longitudinally to the auxiliary flowpath outlet 124. The auxiliary flowpath 114 and its auxiliary flowpath trajectory 126 may thereby change axial directions between the auxiliary flowpath inlet 122 and the auxiliary flowpath outlet 124. The auxiliary flowpath trajectory 126 may also have a curved shape (e.g., arcuate shape, splined shape, etc.), for example, in the longitudinal reference plane. With this arrangement, the auxiliary flowpath 114 may receive incoming air through the auxiliary flowpath inlet 122 along the axial forward direction and provide outgoing air through the auxiliary flowpath outlet 124 along the axial aft direction. The present disclosure, however, is not limited to such an exemplary auxiliary flowpath arrangement. For example, in other embodiments, the auxiliary flowpath trajectory 126 at the auxiliary flowpath inlet 122 or the auxiliary flowpath outlet 124 may be perpendicular to the propulsion system axis 22 when viewed, for example, in the longitudinal reference plane.

The auxiliary flowpath inlet 122 (e.g., when open) is configured to fluidly couple the external environment 28 to the auxiliary flowpath 114. The auxiliary flowpath inlet 122 is disposed along an exterior of the aircraft propulsion system 20 and its housing structure 56. The auxiliary flowpath inlet 122 of FIG. 3, for example, is disposed in and along the exterior surface 58. More particularly, the auxiliary flowpath inlet 122 may be disposed in the splitter structure exterior wall 108 axially between the splitter structure leading edge 106 and the guide vane structure 36 and, more generally, axially between the propulsor rotor 34 (see FIG. 2) and the guide vane structure 36. The auxiliary flowpath inlet 122 thereby borders the external environment 28. The present disclosure, however, is not limited to such an exemplary auxiliary flowpath inlet arrangement. For example, in other embodiments, it is contemplated the auxiliary flowpath inlet 122 may be arranged axially inline with the guide vane structure 36 and its guide vanes 52 or axially aft of the guide vane structure 36.

The auxiliary flowpath outlet 124 (e.g., when open) is configured to fluidly couple the auxiliary flowpath 114 to the engine flowpath 72. The auxiliary flowpath outlet 124 is disposed along the engine flowpath 72, longitudinally between the engine flowpath inlet 74 and the compressor section 67 (see FIG. 2). The auxiliary flowpath outlet 124 of FIG. 3, for example, is disposed in and along an outer flowpath wall 128, which outer flowpath wall 128 at least partially forms an outer peripheral boundary of an inlet duct section 130 of the engine flowpath 72 upstream of the compressor section 67 (see FIG. 2). The auxiliary flowpath outlet 124 thereby borders the engine flowpath 72.

The auxiliary flowpath outlet 124 of FIG. 3 is (e.g., slightly) offset axially forward of the auxiliary flowpath inlet 122 along the propulsion system axis 22. The present disclosure, however, is not limited to such an exemplary auxiliary flowpath arrangement. For example, in other embodiments, the auxiliary flowpath outlet 124 may be axially aligned with the auxiliary flowpath inlet 122 or (e.g., slightly) offset axially aft of the auxiliary flowpath inlet 122 along the propulsion system axis 22.

Each of the flow regulators 116, 118 is configured to regulate a flow of air (e.g., ambient) within / through the auxiliary flowpath 114. The inlet flow regulator 116 may be disposed at (or about) the auxiliary flowpath inlet 122. The inlet flow regulator 116 of FIG. 3, for example, forms the auxiliary flowpath inlet 122 along the splitter structure exterior wall 108. This inlet flow regulator 116 is configured to selectively regulate the flow of air from the external environment 28 into the auxiliary flowpath 114. By contrast, the outlet flow regulator 118 may be disposed at (or about) the auxiliary flowpath outlet 124. The outlet flow regulator 118 of FIG. 3, for example, forms the auxiliary flowpath outlet 124 along the outer flowpath wall 128. This outlet flow regulator 118 is configured to selectively regulate the flow of air out of the auxiliary flowpath 114 into the engine flowpath 72. When the flow regulators 116 and 118 are closed, the flow regulators 116 and 118 may fluidly decouple the auxiliary flowpath 114 respectively from the external environment 28 and the engine flowpath 72. When the flow regulators 116 and 118 are open, the flow regulators 116 and 118 may fluidly couple the auxiliary flowpath 114 respectively to the external environment 28 and the engine flowpath 72 without, for example, any imposed flow restrictions through the flow regulators 116 and 118. When the flow regulators 116 and 118 are partially open, the flow regulators 116 and 118 may fluidly couple the auxiliary flowpath 114 respectively to the external environment 28 and the engine flowpath 72 with, for example, a select imposed flow restriction through the flow regulators 116 and 118 to meter the flow of air.

The electronic controller 120 of FIG. 3 is in signal communication (e.g., hardwired and/or wirelessly coupled) with the inlet flow regulator 116 and the outlet flow regulator 118. This electronic controller 120 may also be in signal communication with the vane actuation system 64 of FIG. 2 and/or the blade actuation system 50 of FIG. 2. Referring again to FIG. 3, the electronic controller 120 may be configured as (or may be in signal communication with) an onboard engine controller; e.g., an electronic engine controller (EEC), an electronic control unit (ECU), a full-authority digital engine controller (FADEC), etc. The electronic controller 120 may be implemented with a combination of hardware and software. The hardware may include memory 132 and at least one processing device 134, which processing device 134 may include one or more single-core and/or multi-core processors. The hardware may also or alternatively include analog and/or digital circuitry other than that described above.

The memory 132 is configured to store software (e.g., program instructions) for execution by the processing device 134, which software execution may control and/or facilitate performance of one or more operations such as those described herein. The memory 132 may be a non-transitory computer readable medium. For example, the memory 132 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

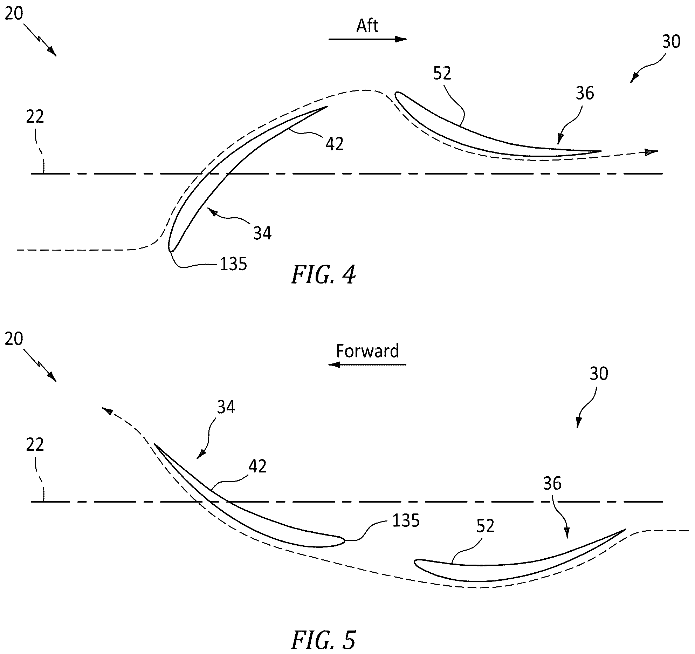

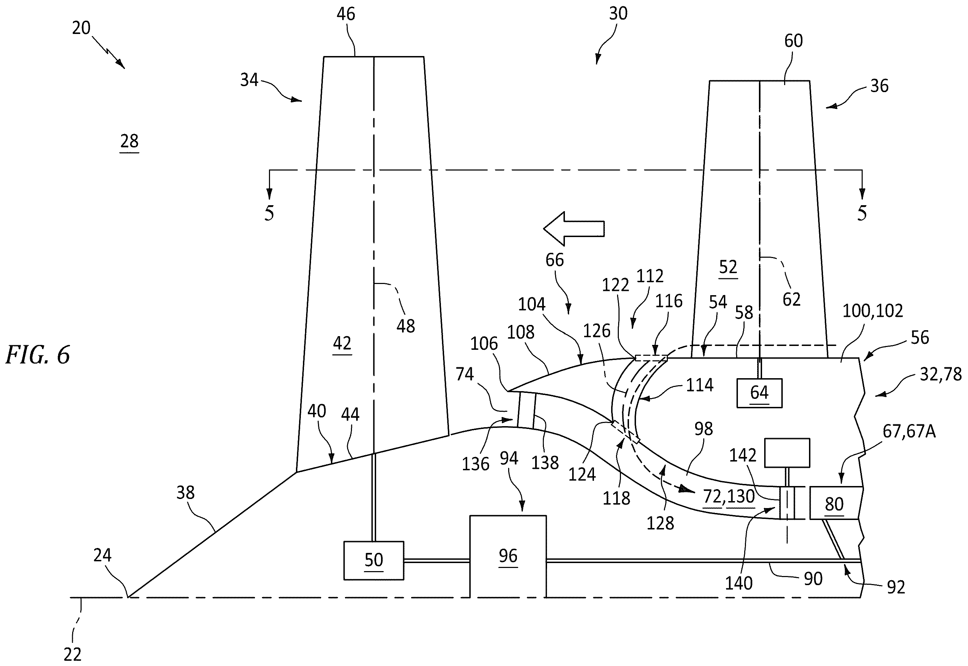

During multiple phases of aircraft travel (e.g., during taxiing, takeoff, climb, cruise and descent), referring to FIG. 4, the pitch of the propulsor blades 42 is selected to propel the ambient air in the axial aft direction to provide the forward aircraft thrust. During at least one mode of this forward thrust operation, one or more of the flow regulators 116 and/or 118 of FIG. 3 close (or remain closed) to respectively fluidly decouple the auxiliary flowpath 114 from the external environment 28 and the engine flowpath 72. Therefore, during this forward thrust operating mode, substantially or completely all of the core air received by the compressor section 67 of FIG. 2 flows through the engine flowpath inlet 74. However following touchdown during aircraft landing, referring to FIG. 5, the pitch of the propulsor blades 42 may be selected to propel the ambient air in the axial forward direction to provide the reverse aircraft thrust. The propulsor blade 42, for example, may be pivoted by the blade actuation system 50 (see FIG. 2) about one-hundred to one-hundred and forty degrees (100°-140°) from the pitch position of FIG. 4 to the pitch position of FIG. 5. This pivoting of each propulsor blade 42 may reverse an orientation of its mechanical leading edge 135. During such reverse thrust operation, referring to FIG. 6, the rotating propulsor rotor 34 pulls the ambient air across the guide vane structure 36 and its guide vanes 52 and directs an outer stream of that air in the axial forward direction. During at least one mode of this reverse thrust operation, each of the flow regulators 116 and 118 of FIG. 3 opens (or remains open) to respectively fluidly couple the auxiliary flowpath 114 to the external environment 28 and the engine flowpath 72. Therefore, during this reverse thrust operating mode, at least some, a majority or all of the core air received by the compressor section 67 of FIG. 2 flows through the auxiliary flowpath 114. Here, the auxiliary flowpath 114 of FIG. 6 may provide a relatively gradual transition to redirect and turn a forward flowing airflow received from the external environment 28 to an aft flowing airflow directed into the engine flowpath 72 (downstream of the engine flowpath inlet 74). By providing this relatively gradual transition, flow distortions in the incoming core air may be reduced within the inlet duct section 130. By contrast, without the auxiliary flowpath system 112, flow distortions in the incoming core air may be relatively high for the forward flowing airflow that turns around the relatively sharp splitter structure leading edge 106 into the engine flowpath 72 through the engine flowpath inlet 74.

Referring to FIG. 2, the aircraft propulsion system 20 and its turbine engine 32 may include a core inlet vane structure 136 configured to condition (e.g., straighten out, de-swirl, etc.) the inner stream of air directed into the engine flowpath 72 through the engine flowpath inlet 74. This core inlet vane structure 136 is disposed upstream of the auxiliary flowpath outlet 124 and the compressor section 67 along the engine flowpath 72. The core inlet vane structure 136 of FIG. 2, for example, is disposed within the engine flowpath 72 at (or about) the engine flowpath inlet 74. The core inlet vane structure 136 includes a plurality of core inlet guide vanes 138. These core inlet guide vanes 138 are arranged and may (or may not) be equispaced circumferentially about the propulsion system axis 22 in an annular array; e.g., a circular array. Each of the core inlet guide vanes 138 extends spanwise across the engine flowpath 72 from an inner peripheral boundary of the engine flowpath 72 to the outer peripheral boundary of the engine flowpath 72. Each of the core inlet guide vanes 138 may be a fixed guide vane which does not pivot or otherwise move. However, in other embodiments, it is contemplated one or more of the core inlet guide vanes 138 may alternatively be configured as a variable guide vane; e.g., a pivotable guide vane.

The aircraft propulsion system 20 and its turbine engine 32 may also or alternatively include a compressor inlet vane structure 140 configured to condition (e.g., pre-swirl, etc.) the core air directed into the compressor section 67 and, more specifically, the LPC section 67A. This compressor inlet vane structure 140 is disposed downstream of the auxiliary flowpath outlet 124 and the core inlet vane structure 136 along the engine flowpath 72. The compressor inlet vane structure 140 is also disposed upstream of the compressor section 67 and its LPC section 67A. The compressor inlet vane structure 140 of FIG. 2, for example, is disposed within the engine flowpath 72 at an upstream end of the compressor section 67 and its LPC section 67A. More particularly, the compressor inlet vane structure 140 is disposed next to and upstream of the LPC rotor 80 along the engine flowpath 72. The compressor inlet vane structure 140 includes a plurality of compressor inlet guide vanes 142. These compressor inlet guide vanes 142 are arranged and may (or may not) be equispaced circumferentially about the propulsion system axis 22 in an annular array; e.g., a circular array. Each of the compressor inlet guide vanes 142 extends spanwise across the engine flowpath 72 from the inner peripheral boundary of the engine flowpath 72 to the outer peripheral boundary of the engine flowpath 72. Each of the compressor inlet guide vanes 142 may be a variable guide vane, which variable guide vane is configured to pivot and/or otherwise move to adjust a parameter (e.g., a pitch) of the respective variable guide vane. However, in other embodiments, it is contemplated one or more of the compressor inlet guide vanes 142 may alternatively be configured as a fixed guide vane.

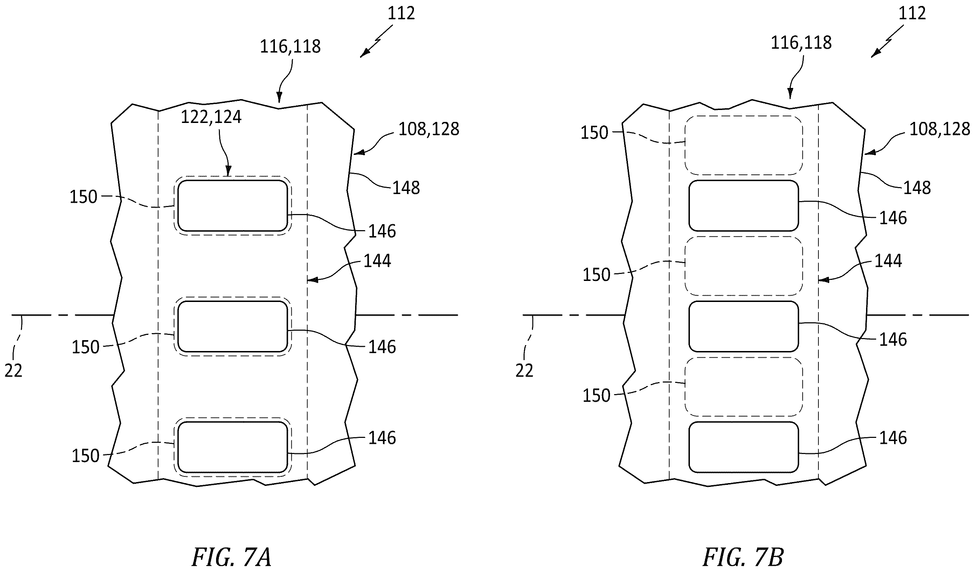

In some embodiments, referring to FIGS. 7A and 7B, one or more of the flow regulators 116 and/or 118 may each be configured as a translating body flow regulator. The flow regulator 116, 118 of FIGS. 7A and 7B, for example, includes a translating regulator body 144; e.g., a translating sleeve. This regulator body 144 is configured to translate circumferentially about the propulsion system axis 22 relative to one or more apertures 146 in a base wall 148; e.g., the splitter structure exterior wall 108 or the outer flowpath wall 128 of FIG. 2. Referring to FIG. 7A, when the regulator body 144 is circumferentially translated into a first position (e.g., an open position), one or more apertures 150 in the regulator body 144 are respectively circumferentially aligned with the one or more apertures 146 in the base wall 148. Here, the aligned sets of apertures 146 and 150 may collectively form an auxiliary flowpath orifice; e.g., the auxiliary flowpath inlet 122 or the auxiliary flowpath outlet 124. Referring to FIG. 7B, when the regulator body 144 is circumferentially translated into a second position (e.g., a closed position), the one or more apertures 150 in the regulator body 144 are respectively circumferentially misaligned from the one or more apertures 146 in the base wall 148. Solid portions of the regulator body 144 thereby circumferentially cover and may close-off the one or more apertures 146 in the base wall 148. The present disclosure, however, is not limited to such an exemplary arrangement. For example, in other embodiments, the regulator body 144 may alternatively (or also) translate axially relative to the base wall 148 to open or close the auxiliary flowpath orifice.

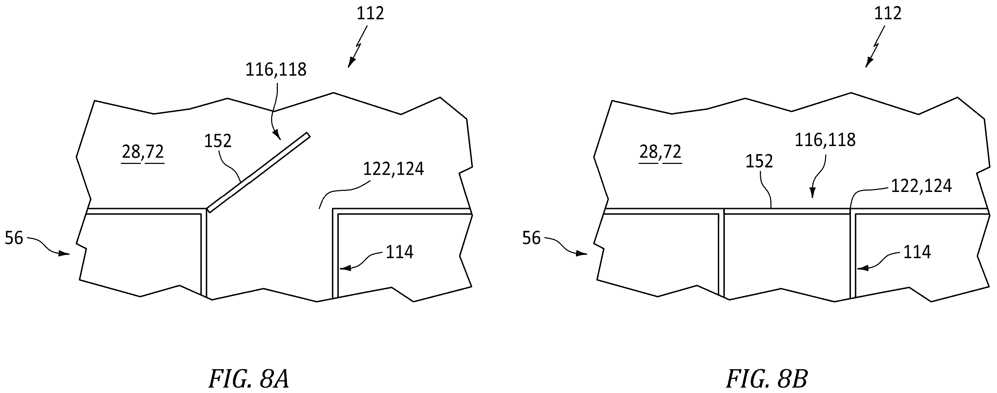

In some embodiments, referring to FIGS. 8A and 8B, one or more of the flow regulators 116, 118 may each be configured as a pivoting body flow regulator. The flow regulator 116, 118 of FIGS. 8A and 8B, for example, includes a pivoting regulator body 152. This regulator body 152 is configured to pivot about a pivot axis between a first position (e.g., an open position of FIG. 8A) and a second position (e.g., a closed position of FIG. 8B). Referring to FIG. 8A, when the regulator body 152 is pivoted into the first position, the regulator body 152 pivots away from and exposes a respective auxiliary flowpath orifice; e.g., the auxiliary flowpath inlet 122 or the auxiliary flowpath outlet 124. Referring to FIG. 8B, when the regulator body 152 is pivoted into the second position, the regulator body 152 pivots towards and covers the respective auxiliary flowpath orifice.

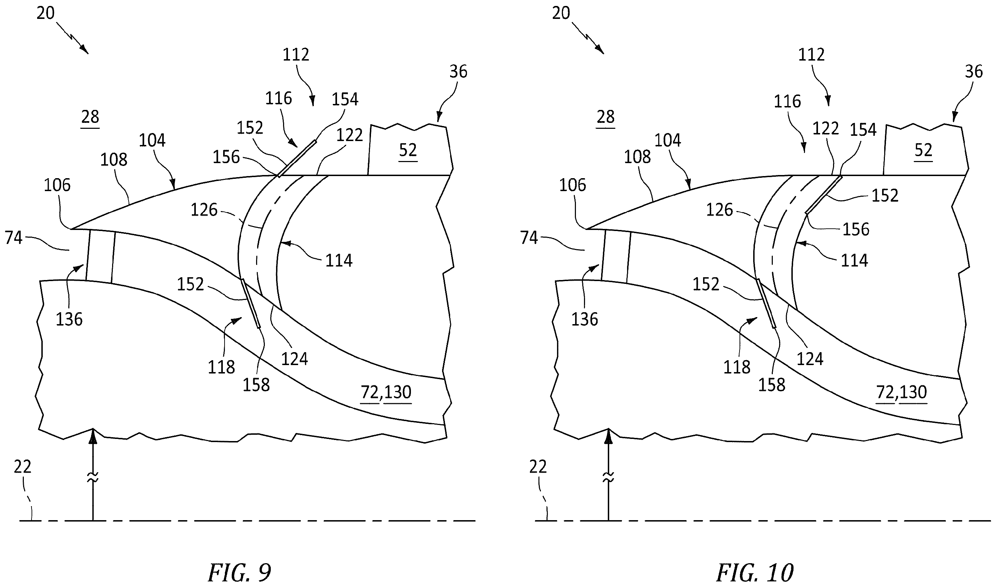

In some embodiments, referring to FIG. 9, the inlet flow regulator 116 may also be configured as an air scoop. For example, an axial aft end 154 of the regulator body 152 of the inlet flow regulator 116 may move radially outward into the external environment 28 when the inlet flow regulator 116 is opened. The present disclosure, however, is not limited to such an exemplary arrangement. For example, referring to FIG. 10, an axial forward end 156 of the regulator body 152 of the inlet flow regulator 116 may move radially inward into the auxiliary flowpath 114 when the inlet flow regulator 116 is opened.

In some embodiments, referring to FIGS. 9 and 10, the outlet flow regulator 118 may also be configured to at least partially (or completely) close off a section of the engine flowpath 72 which is located upstream of the auxiliary flowpath outlet 124. An axial aft end 158 of the regulator body 152 of the outlet flow regulator 118, for example, may move radially inward into the engine flowpath 72 when the outlet flow regulator 118 is opened.

In some embodiments, referring to FIG. 2, the flow regulators 116 and/or 118 may be actuated independent of (e.g., but, timed with) pitch adjustment of the propulsor blades 42 and/or pitch adjustment of the guide vanes 52. In other embodiments, the actuation of one or both of the flow regulators 116 and/or 118 may be tied to pitch adjustment of the propulsor blades 42 and/or pitch adjustment of the guide vanes 52. For example, the vane actuation system 64 may also be configured to actuate the flow regulators 116 and/or 118, for example when the guide vanes 52 are moved to or towards a reverse thrust pitch.

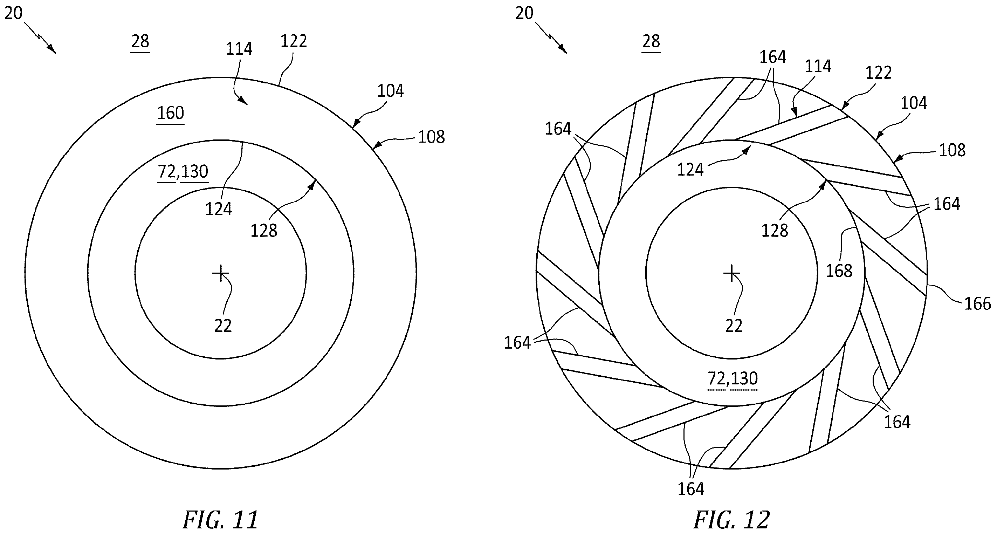

In some embodiments, referring to FIG. 11, the auxiliary flowpath 114 may be configured as or otherwise include an annular flowpath passage 160. This flowpath passage 160 extends circumferentially around the propulsion system axis 22. The flowpath passage 160 may extend between (or about) the auxiliary flowpath inlet 122 and the auxiliary flowpath outlet 124. With such an arrangement, referring to FIG. 3, a forward portion of the splitter structure 104 may be connected to an aft portion of the splitter structure 104 by one or more struts 162. These struts 162 are arranged and may (or may not) be equispaced circumferentially about the propulsion system axis 22 in an array; e.g., an annular array. Each of these struts 162 projects spanwise (e.g., generally axially) across the auxiliary flowpath 114 from the forward portion of the splitter structure 104 to the aft portion of the splitter structure 104. It is contemplated one or more of the struts 162 may (or may not) each be configured as a guide vane configured to condition (e.g., pre-swirl or de-swirl) the air flowing through the auxiliary flowpath 114.

In some embodiments, referring to FIG. 12, the auxiliary flowpath 114 may be collectively configured from a plurality of (e.g., fluidly decoupled) flowpath passages 164. These flowpath passages 164 are arranged and may (or may not) be equispaced circumferentially about the propulsion system axis 22 in an array; e.g., an annular array. Each of the flowpath passages 164 may extend longitudinally between a respective aperture 166 of the auxiliary flowpath inlet 122 and a respective aperture 168 of the auxiliary flowpath outlet 124. Moreover, in some embodiments, one or more of the flowpath passages 164 may each extend circumferentially about the propulsion system axis 22 as the respective flowpath passage 164 extends longitudinally between the auxiliary flowpath inlet 122 and the auxiliary flowpath outlet 124. With such an arrangement, the flowpath passages 164 may be configured to condition (e.g., pre-swirl) the air directed into the engine flowpath 72 from the auxiliary flowpath 114.

The guide vane structure 36 is described above as a fixed (e.g., non-rotatable) guide vane structure. It is contemplated, however, the guide vane structure 36 may alternatively be selectively rotatable about the propulsion system axis 22. With such an arrangement, the aircraft propulsion system 20 may be configured as an open rotor propulsion system with a swirl recovery blade (SRB) open rotor architecture. More particularly, the aircraft propulsion system 20 may operate as: (A) a counter-rotating open rotor (CROR) propulsion system during a dual rotor mode of operation (e.g., when both the propulsor rotor 34 and the structure 36 are counter-rotating about the propulsion system axis 22); and (B) a single open rotor and swirl recovery vane (SRV) propulsion system during a single rotor mode of operation (e.g., when the propulsor rotor 34 is rotating and the structure 36 is rotationally fixed about the propulsion system axis 22). Note, when the guide vane structure 36 is configured to selectively rotate about the propulsion system axis 22, the moving guide vanes 52 operate as propulsor blades.

The aircraft propulsion system 20 of FIG. 1 and its propulsion section 30 are described as including the guide vane structure 36 with an SRV or SRB configuration. The present disclosure, however, is not limited to such an exemplary propulsion system configuration. For example, the aircraft propulsion system 20 may alternatively be configured without an open guide vane structure. The aircraft propulsion system 20, for example, may be configured as a single rotor (SR) open rotor propulsion system. In another example, the aircraft propulsion system 20 may be configured with a set of the open propulsor rotors (e.g., counter-rotating propulsor rotors) operatively coupled to the turbine engine 32 (see FIG. 1) through the drivetrain 94. The aircraft propulsion system 20, for example, may be configured as a counter-rotating open rotor (CROR) propulsion system.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A propulsion system for an aircraft, comprising:
an open propulsor rotor;
a turbine engine configured to drive rotation of the open propulsor rotor about an axis, the turbine engine including an engine flowpath, a compressor section, a combustor section and a turbine section, and the engine flowpath extending through the compressor section, the combustor section and the turbine section from an engine flowpath inlet to an engine flowpath exhaust; and
an auxiliary flowpath extending longitudinally along a trajectory from an auxiliary flowpath inlet to an auxiliary flowpath outlet, the auxiliary flowpath inlet disposed along an exterior of the propulsion system that borders an environment external to the propulsion system, and the auxiliary flowpath outlet disposed along the engine flowpath;
wherein the turbine engine is axially aft of the open propulsor rotor along the axis, and the trajectory extends axially forward along the axis as the auxiliary flowpath extends longitudinally from the auxiliary flowpath inlet.

2. The propulsion system of claim 1, wherein the trajectory extends axially aft along the axis as the auxiliary flowpath extends longitudinally to the auxiliary flowpath outlet.

3. The propulsion system of claim 1 or 2, wherein the trajectory extends circumferentially about the axis as the auxiliary flowpath extends longitudinally between the auxiliary flowpath inlet and the auxiliary flowpath outlet.

4. The propulsion system of any preceding claim, wherein the auxiliary flowpath outlet is disposed between the engine flowpath inlet and the compressor section along the engine flowpath.

5. The propulsion system of any preceding claim, wherein
the turbine engine further includes an inlet vane structure, the inlet vane structure comprises a plurality of inlet guide vanes arranged in an annular array, and each of the plurality of inlet guide vanes extends across the engine flowpath; and
the auxiliary flowpath outlet is disposed between the inlet vane structure and the compressor section along the engine flowpath.

6. The propulsion system of claim 5, wherein the inlet vane structure is disposed at the engine flowpath inlet.

7. The propulsion system of any of claims 1 to 4, wherein
the turbine engine further includes an inlet vane structure, the inlet vane structure comprises a plurality of inlet guide vanes arranged in an annular array, and each of the plurality of inlet guide vanes extends across the engine flowpath; and
the auxiliary flowpath outlet is disposed between the engine flowpath inlet and the inlet vane structure along the engine flowpath.

8. The propulsion system of claim 7, wherein the inlet vane structure is disposed upstream of and next to a compressor rotor in the compressor section.

9. The propulsion system of any preceding claim, further comprising an open guide vane structure next to the open propulsor rotor.

10. The propulsion system of claim 9, wherein the auxiliary flowpath inlet is disposed axially between the open propulsor rotor and the open guide vane structure along the axis.

11. The propulsion system of claim 9 or 10, further comprising:
a splitter structure;
a leading edge of the splitter structure forming an outer peripheral boundary of the engine flowpath inlet; and
the auxiliary flowpath inlet disposed axially between the leading edge of the splitter structure and the open guide vane structure.

12. The propulsion system of any preceding claim , further comprising:
an inlet flow regulator disposed at the auxiliary flowpath inlet;
the inlet flow regulator configured to regulate airflow from the environment into the auxiliary flowpath through the auxiliary flowpath inlet, and / or
further comprising:
an outlet flow regulator disposed at the auxiliary flowpath outlet;
the outlet flow regulator configured to regulate airflow from the auxiliary flowpath into the engine flowpath through the auxiliary flowpath outlet, and / or
further comprising:
a flow regulator comprising a regulator body;
the regulator body configured to translate between a first position and a second position to regulate airflow in the auxiliary flowpath, and / or
further comprising:
a flow regulator comprising a regulator body;
the regulator body configured to pivot between a first position and a second position to regulate airflow in the auxiliary flowpath.

13. A propulsion system for an aircraft, comprising:
an open propulsor rotor;
a turbine engine configured to drive rotation of the open propulsor rotor about an axis, the turbine engine including an engine flowpath, a compressor section, a combustor section and a turbine section, and the engine flowpath extending through the compressor section, the combustor section and the turbine section from an engine flowpath inlet to an engine flowpath exhaust; and
an auxiliary flowpath extending longitudinally along a trajectory from an auxiliary flowpath first orifice to an auxiliary flowpath second orifice, the auxiliary flowpath first orifice disposed along an exterior of the propulsion system that borders an environment external to the propulsion system, and the auxiliary flowpath second orifice disposed along the engine flowpath;
wherein the trajectory extends circumferentially about the axis as the auxiliary flowpath extends longitudinally between the auxiliary flowpath first orifice and the auxiliary flowpath second orifice.

14. The propulsion system of claim 13, wherein
the auxiliary flowpath first orifice is configured as an inlet into the auxiliary flowpath from the environment; and
the auxiliary flowpath second orifice is configured as an outlet from the auxiliary flowpath into the engine flowpath, and / or wherein the trajectory changes from a first direction along the axis to a second direction along the axis as the auxiliary flowpath extends longitudinally between the auxiliary flowpath first orifice and the auxiliary flowpath second orifice.

15. A propulsion system for an aircraft, comprising:
an open propulsor rotor;
a turbine engine configured to drive rotation of the open propulsor rotor about an axis, the turbine engine including an engine flowpath, a compressor section, a combustor section and a turbine section, and the engine flowpath extending through the compressor section, the combustor section and the turbine section from an engine flowpath inlet to an engine flowpath exhaust;
an auxiliary flowpath extending from an auxiliary flowpath inlet to an auxiliary flowpath outlet, the auxiliary flowpath inlet disposed along an exterior of the propulsion system that borders an environment external to the propulsion system, and the auxiliary flowpath outlet disposed along the engine flowpath; and
a flow regulator configured to open during a reverse thrust operating mode such that the auxiliary flowpath directs air from the environment into the engine flowpath, wherein, optionally, the flow regulator is further configured to at least partially close off a section of the engine flowpath between the auxiliary flowpath outlet and the engine flowpath inlet during the reverse thrust operating mode.
